# EUROPEAN PATENT APPLICATION

(11) **EP 2 820 941 A2**
(43) Date of publication of application: **07.01.2015**
(21) Application number: 14164791.7
(22) Date of filing: 15.04.2014
(51) Int. Cl.: A01K 1/035

(54) **Pet toy and shelter**

(30) Priority: 30.08.2013 US 201314015327; 15.04.2013 US 201361812108 P
(71) Applicant: Ballentyne, Kim S., 9661 Parike (Brakel) (BE)
(72) Inventor: Ballentyne, Kim S., 9661 Parike (Brakel) (BE)
(74) Representative: Sarlet, Steven Renaat Irène

(57) **Abstract**

A pet toy and shelter (10) is disclosed. An example pet toy and shelter may include a housing (100) with a passage (170) for a pet to enter and exit the housing. The housing may be assembled from a collapsed state and unassembled back to the collapsed state. The example pet toy and shelter may also include at least one fringe (200) for attachment to the housing adjacent to the passage to at least partially cover the passage while still enabling entry and exit of the pet through the passage.

## Description

### BACKGROUND

People have kept animals as pets to provide labor, companionship and entertainment. Persons with pets typically provide stimulation to these pets by training or playing with them. To enrich training and play, pet owners frequently make use of toys and other accessories. Well known accessories include balls and noise makers. Some pet owners also enjoy providing their pets with wearable accessories such as shirts, boots or backpacks.

### BRIEF DESCRIPTION OF THE DRAWINGS

FIG. 1 illustrates a perspective view of an example pet toy and shelter.
FIG. 2 illustrates a perspective view of the example pet toy and shelter in a folded or collapsed configuration.
FIG. 3 illustrates assembly of the example pet toy and shelter.
FIGS. 4-5 illustrates a front-side plan view of the example pet toy and shelter.
FIG. 6 illustrates a rear perspective view of the example pet toy and shelter.
FIG. 7 illustrates a back-side plan view of the example pet toy and shelter
FIG. 8 illustrates a side plan view of the example pet toy and shelter.
FIG. 9 illustrates a top plan view of the example pet toy and shelter.
FIG. 10 illustrates an example pet toy and shelter as it may be provided as a kit.
FIG. **11** illustrates example assembly instructions for the example pet toy and shelter.
FIG. 12 illustrates another example pet toy and shelter with a fringe and decorative frame.
FIG. 13 illustrates an example pet toy and shelter with a variety of additional fringe sheets.
FIG. 14 illustrates a perspective view of another example pet toy and shelter.
FIGS. 15-16 illustrate perspective views of the example pet toy and shelter.
FIGS. 17-18 illustrate views of a pet playing with the example pet toy and shelter.

### DETAILED DESCRIPTION

A pet toy and shelter is disclosed herein as it may be provided for household pets, such as but not limited to cats. The example pet toy and shelter may be used by anybody who passionately cares about his or her pet. The example pet toy and shelter is safe, easy to assemble, provides endless hours of fun for pets and their owners, and can be used as a sleeping area. It may also serve as a temporary and/or disposable and removable housing. The example pet toy and shelter may also be used as a litter box or with existing litter boxes (e.g., as a cover). It may be easily displayed in the store (e.g., at the checkout or point of sale zones) alone or with existing pet toys and accessories. The example pet toy and shelter has the ability to assume a collapsed state, making it easily transported and stacked for storage.

The example pet toy and shelter is described herein primarily with reference to its use with cats (or more generally, feline pets), although other animals or pets may also benefit from its use. In an example, the pet toy and shelter is eco-friendly, and may be prefabricated from recycled cardboard or other recycled material. Also in an example, the pet toy and shelter requires no batteries or electricity to use.

Before continuing, it is noted that as used herein, the terms "includes" and "including" mean, but is not limited to, "includes" or "including" and "includes at least" or "including at least." The term "based on" means "based on" and "based at least in part on."

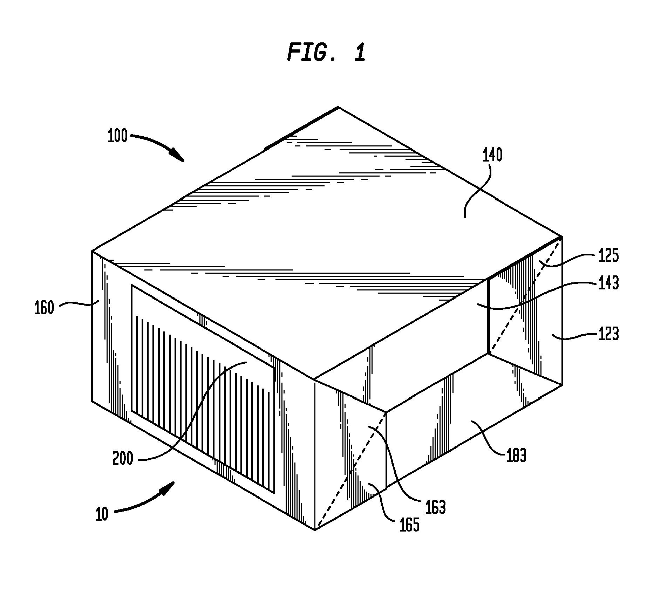

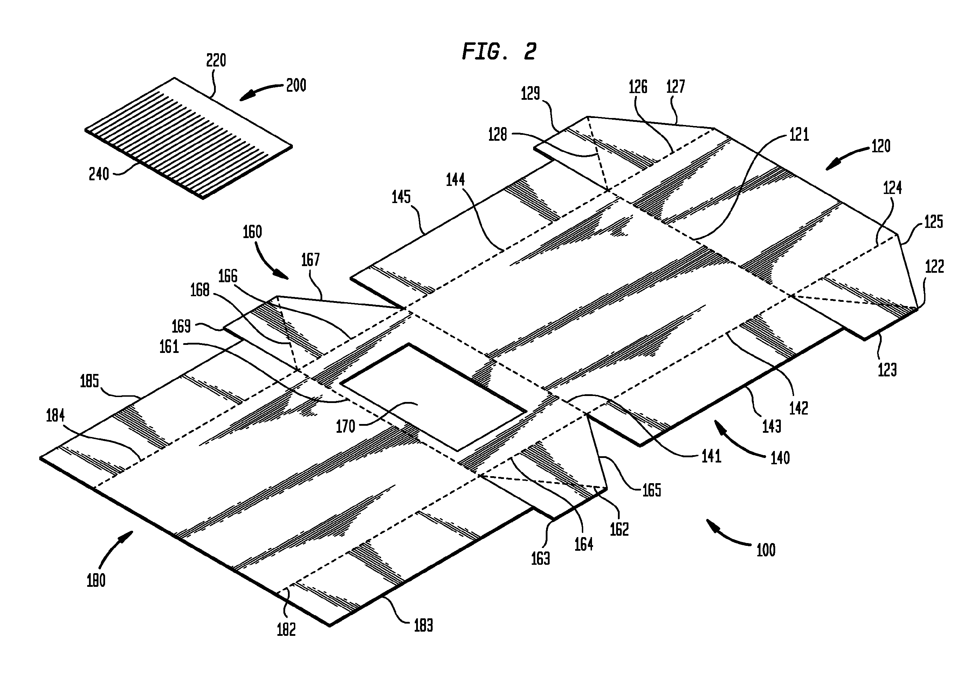

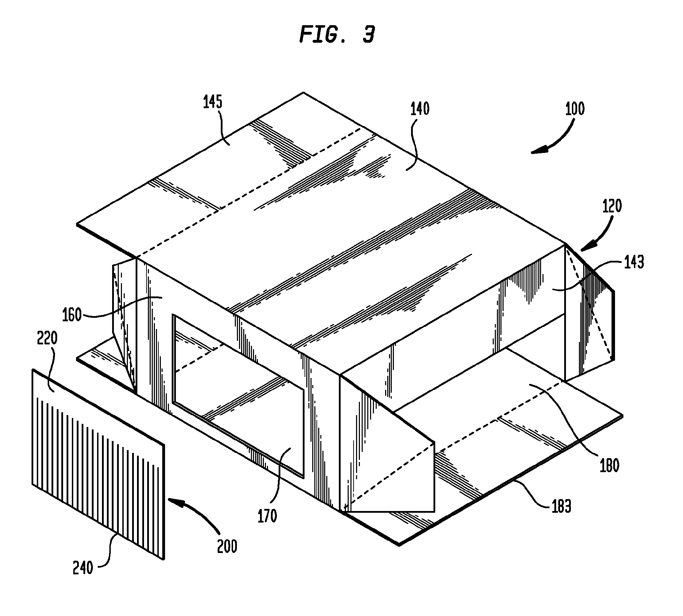

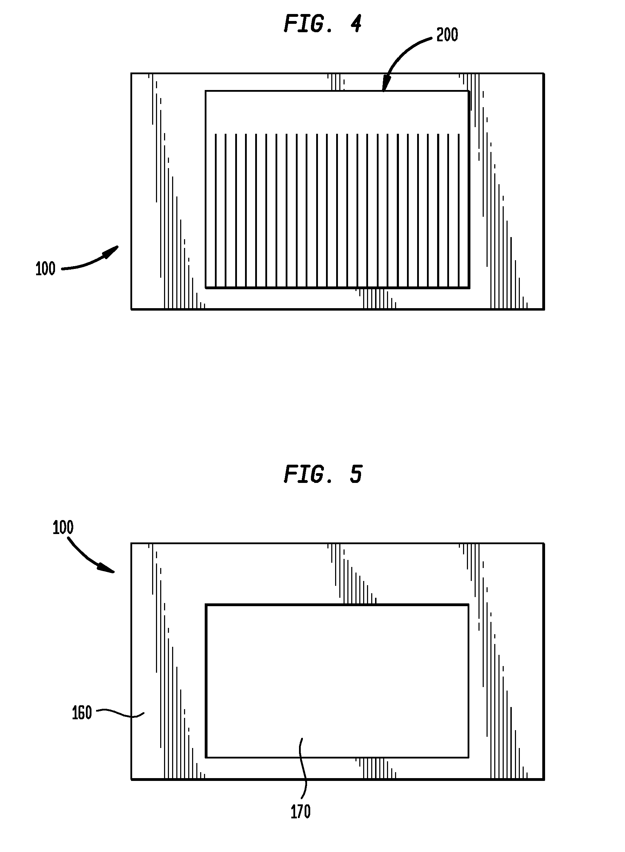

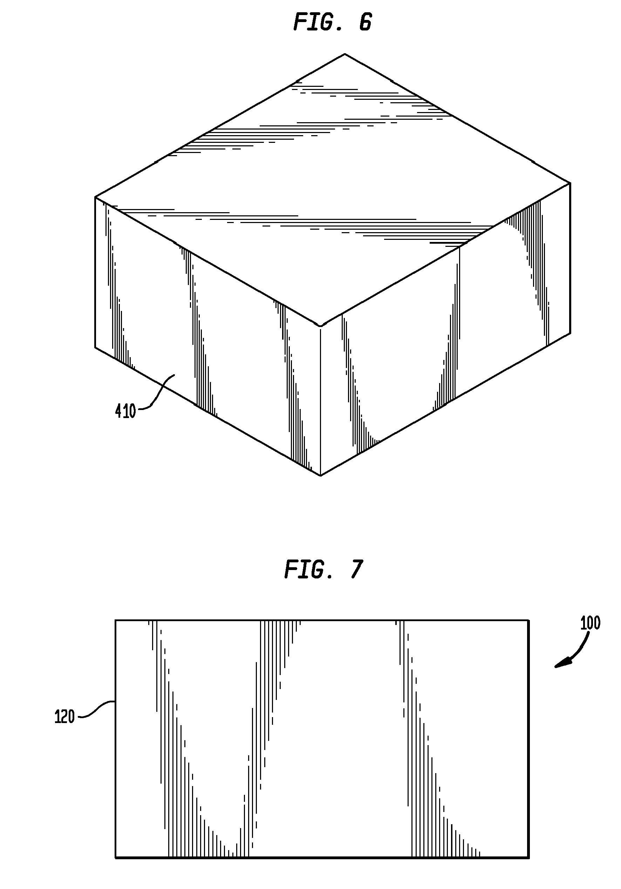

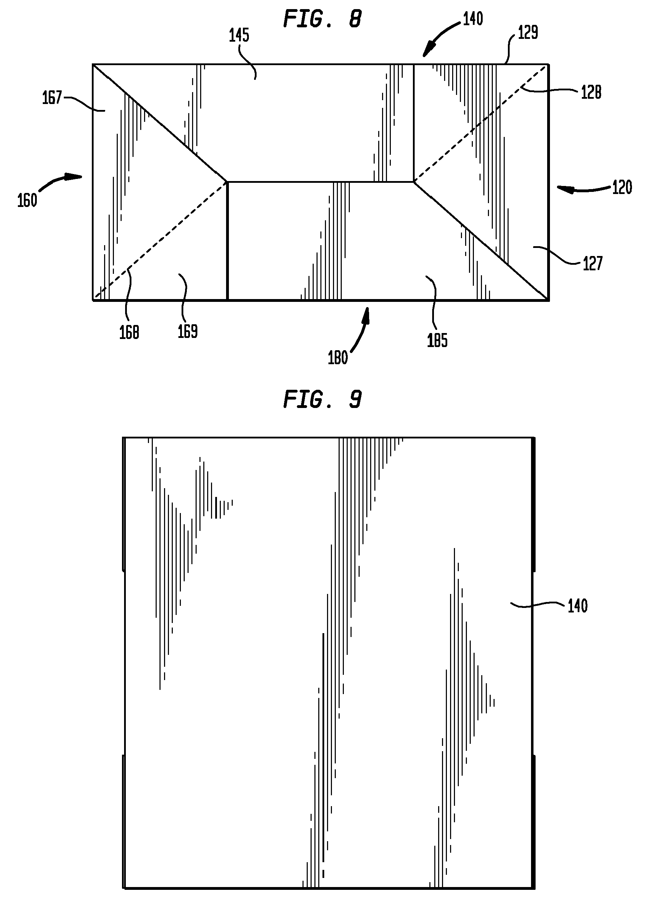

FIG. 1 is a perspective view of an example pet toy and shelter 10. FIG. 2 illustrates a perspective view the example pet toy and shelter 10 in a collapsed state. FIG. 3 illustrates a perspective view of the example pet toy and shelter 10 in a partially assembled state. FIG. 4 is a front-side plan view of the example pet toy and shelter 10 having a fringe. FIG. 5 is a front-side plan view of the example pet toy and shelter 10 with the fringe removed to reveal an entryway sized for a cat or other pet to fit through. FIG. 6 illustrates a rear view of the example pet toy and shelter after assembly and wrapping to provide a decorative motif. FIG. 7 illustrates a back-side plan view of the example pet toy and shelter. FIG. 8 illustrates a side plan view of an example pet toy and shelter. FIG. 9 illustrates a top plan view of the example pet toy and shelter.

In an example, the pet toy and shelter 10 includes a housing 100 which may be assembled by expanding or erecting a box from a collapsed state (see, e.g., FIGS. 2-3) to the assembled configuration shown in FIG. 1. The example pet toy and shelter 10 may be returned to the collapsed state, if desired, for example for storage or transport.

In the unassembled or collapsed state, the housing 100 may assume a generally or substantially flat profile, thereby occupying a relatively small space. The example pet toy and shelter may assume a prismatoid shape in the erect state, such as, for example, a rectangular prism, a pentagonal prism or a pyramid. Other shapes are also contemplated as being within the scope of the disclosure herein.

A number of facets 120, 140, 160 and 180 may be configured for relative flexion along creases or flexible fold-lines 121, 141 and 161 between respective adjacent facets 120 and 140, 140 and 160, and 160 and 180. Example facets 120, 140, 160 and 180 may include pivoting flaps 125, 127, 143, 145, 165, 167, 183 and 185. Creases or flexible fold lines 124, 126, 142, 144, 164, 166, 168, 182 and 184 facilitate flexion of flaps relative to respective facets 120, 140, 160 and 180. Some of the flaps, such as 125, 127, 165 and 167 may be further provided with sub-flaps 123, 129, 163 and 169 which are enabled for flexion relative to the respective flap 125, 127, 165 or 167 by creases or fold-lines 122, 128, 162 and 168. Two or more of the flaps 125, 127, 143, 145, 165, 167, 183 and 185 and sub-flaps 123, 129, 163 and 169 may overlap to stabilize toy and shelter 10 in the erect state. Still other facets may be included based at least in part on design considerations.

A passage or entryway 170 (e.g., an opening or hole) is formed through one or more of the facets 120, 140, 160 and 180, for example facet 160, and may take any of a variety of shapes including but not limited to rectangular, square, octagonal, circular, semi-circular or triangular. Other shapes are also contemplated. Passage 170 may be any hole, opening, hollow space, or receptacle used to provide a hollow object such as a cavity, aperture, den, burrow, or gap.

In an example, passage 170 may be pre-cut into housing 100. In another example, perforations may be provided in the housing 100 for the end-user to form a selectable, but at least semi-custom size passage 170 in the housing 100. A smaller passage may thereby be created by the user for smaller pets, and a larger passage may be created by the user for larger pets. In yet other examples, housing 100 may be manufactured with demarcations indicating lines which the user may cut to provide passage 170. As with perforations, demarcations may be provided such that one of a variety of passage sizes may be selected by the end user. In an example, the user may change the size of the opening as the pet grows.

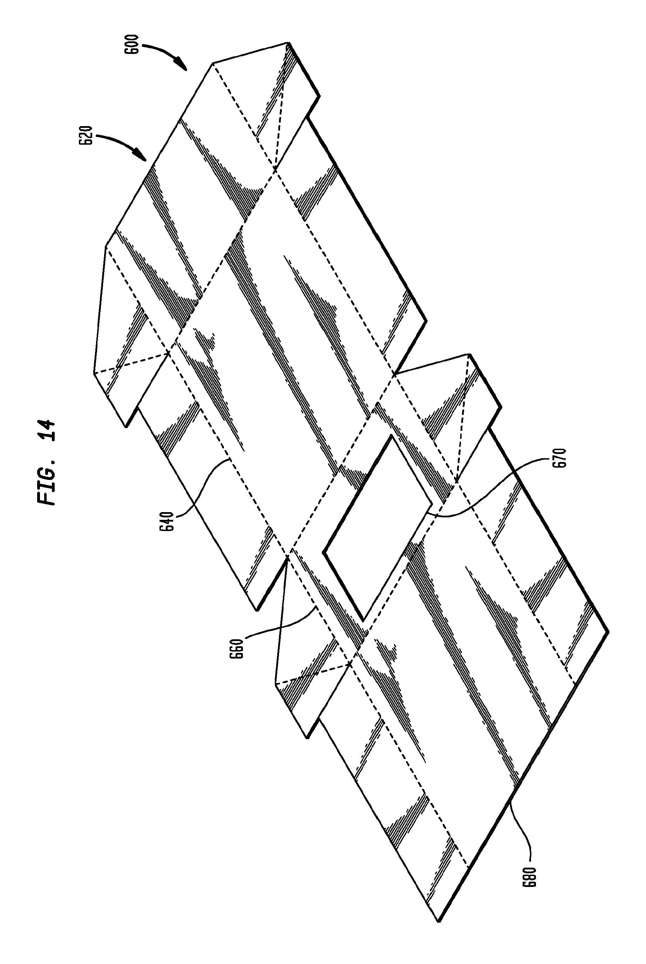

FIG. 14 illustrates a housing 600 having facets 620, 640, 660 and 680 wherein facet 660 includes perforations 670 for forming a passage. Housing 100 may be formed of any of a variety of materials including foldable materials such as cardboard, recycled material, plastic or composites.

While example housing 100 is illustrated as being disconnected in a collapsed state, it is noted that housing 100 may also have a continuous or closed loop configuration in the collapsed state. For example, in addition to a first edge of front facet 160 being joined with a first edge of bottom facet 180, a second edge of front facet 160 may be joined with a first edge of top facet 140 and a second edge of top facet 140 may be joined with a first edge back facet 120. A second edge of back facet 120 may also be joined with a second edge of top facet 180.

In an example, a fringe 200 is attachable to housing 100 in any of a variety of locations, for example, adjacent to and at least partially covering passage 170. Fringe 200 may include a base portion 220 and a plurality of individual flexible fibers or strips 240 extending from the base portion 220. When fringe 200 is coupled with housing 100 such that passage 170 is at least partially covered, a pet is able to pass through the fringe 200 when entering or exiting passage 170.

In an example, the fringe 200 may include a coupling for detachably securing the fringe 200 to the housing 100 (e.g., to the outside and/or inside) of the passage. Any of a variety of couplings may be used including but not limited to pins, hook-and-loop fasteners or adhesives. Adhesives may be pre-provisioned to the fringe 200, as by a material which becomes tacky by removing a film strip or upon application of moisture (such as with envelopes or postage stamps). In an example, the fringe 200 may be permanently affixed to housing 100 by a permanent adhesive, either by a manufacturer, supplier, by an end-user, or provided as an integral portion of the toy and shelter 10.

It should be noted that pets like to keep themselves clean and are very discrete and conscious of obnoxious odors caused by eliminating their own feces, and accordingly litter boxes are often provided for felines. However, conventional litter boxes are open (e.g., being provided as a "pan"). The fringes 200 can be used with existing litter boxes and/or a litter box can be provided with the example pet toy and shelter 10 such that the fringes 200 are placed in front of an entry to the litter box to provide smart and stylish ways to hide the entrance to the litter box, whilst still providing total privacy whilst the pet is going about its business.

It should be noted that the fringes 200 can be incorporated in any other pet toys, furniture, accessories, litter boxes, litter trays (e.g., by surrounding the box or tray with the housing 100). For example, the fringes may also be used with a climbing den, climbing pole, cat frame, cat tree, any form of cat toys using boxes or cat litter boxes, litter trays surrounded by housing etc. In an example, the fringe 200 is attachable to an entry way, entrance or exit to any device, such as but not limited to, a housed or hooded litter box or an enclosed litter housing box.

The fringe 200 provides an unproblematic, safe, comfortable, simple, effective, easy to quietly maneuver, pet-friendly entrance, entryway and exit for a pet to conveniently and privately access the housed litter box which automatically ensures privacy and allows sufficient air ventilation for pets to maintain their privacy whilst doing their business. Indeed, more than one entryway may be provided, and fringe 200 may be provided on one or more of these passageways.

The fringe 200 helps ensure that pets feel less vulnerable when they are sleeping or eliminating (e.g., when used as a litter box) because the pet can still have a view and see what is happening around them while they are eliminating, but be provided with a sense of privacy.

Cats are almost neurotic about their need to feel safe and secure while they are eliminating. Hooded or housed litter boxes incorporating the fringe 200 may provide cats with a quiet protected place. Young kittens and old geriatric cats with physical limitations may have difficulties using certain types of hooded litter boxes, or litter boxes. A solid, swing or fixed permanent door or flap may prevent access or trap your pet inside the litter box housing or hooded litter box. The fringe 200 enables easy access for the pet. For hygienic and sanitation purposes, if the fringe 200 is contaminated, it can be readily disposed of, replaced and recycled and prevent diseases.

Pets like to keep themselves clean and are very discrete and conscious of obnoxious odors caused by their own feces or excrement when going to the toilet. Fringes can be placed in front of entrance, entry ways or exits to housed or hooded litter boxes as a temporary or permanent covering to the entrance, entryway or exit.

The fringe 200 is a smart and stylish way to hide the entrance to the litter box whilst still providing total privacy whilst the pet is going about its business. The fringe 200 helps avoid anything that can cause litter box aversion by making it an attractive place for cats. Disguising the entrance or entryway to the litter box with the fringe and/or housing 100 also may serve as a piece of furniture or other decorative element that can be attractive and placed anywhere in the home or other environment.

In an example, the fringe 200 is provided with individual fibers or strips 240 that are pre-cut and separated from one another. In another example, the fringe 200 includes perforations between adjacent fibers or strips 240 to facilitate separation of fibers or strips 240 by tearing. In another example, the fringe 200 includes a plurality of demarcations indicative of cuts to be made by a user for separating a sheet into individual fibers or strips 240.

Fringe 200 may exhibit a variety of colors and motifs and may be constructed from paper, plastic, or any other suitable material (e.g., at least partially flexible material). In some examples, fringe 200 may also be provided to include strings, beads, small chains and/or other dangling objects, in addition to or instead of strips or fibers 240. Example fringes may be beautiful, quirky, fun, edgy, stylish, simple, patterned, not patterned or a combination of these. In an example, motifs may be provided corresponding to seasons, sports teams, nationalities, or other (e.g., a logo may be provided at the base of fringed 200).

The example pet toy and shelter 10 may include a covering 410 for wrapping housing 100 or portions thereof. FIG. 6 illustrates a rear view of the example pet toy and shelter 10 after it has been assembled and wrapped with a cover to provide a decorative motif. Covering 410 may be applied inside and/or outside of the housing 100 and may be provided in any of a variety of materials including but not limited to paper or plastic. In an example, the covering 410 may be provided integral to the housing 100 itself (e.g., the housing 100 may be painted or pre-coated with a covering). As with fringe 200, different coverings may be provided in a variety of colors and motifs.

In an example, a lining material may also be provided inside the housing 100, for example, as a coating. A lining may be water-proof or otherwise provide additional durability to the housing 100. As with covering 410, different colors and motifs may be provided by or to a lining.

The example pet toy and shelter 10 may be entirely or partially constructed of materials (e.g., eco-friendly materials) such as cardboard and paper, and may be provided with a finish in any of a variety of colors, patterns, designs or motifs.

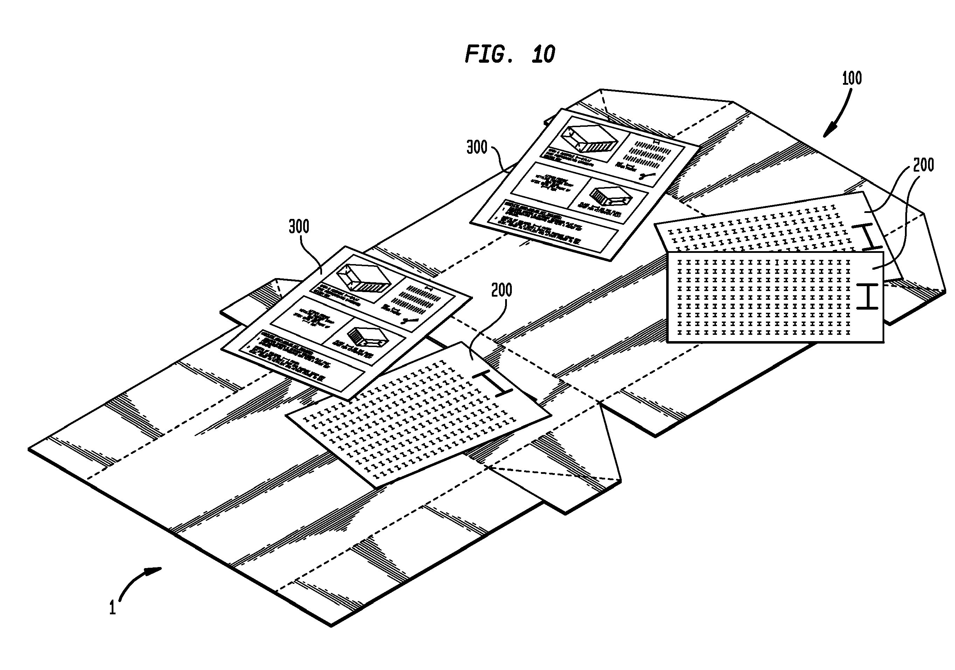

Components of pet toy and shelter 10 such as housing 100, fringe 200 and cover 410 may be provided as a kit or system (FIG. 10). In an example, the kit 1 may be provided as a prefabricated flat pack design packaged together in a thin plastic wrapping, although other packaging is also contemplated. The kit 1 may be provided in a convenient manner for purchase as a complete, grab-and-go package from a retailer or other supplier. The kit 1 may also include instructions for subsequent and easy assembly by purchaser or other end-user.

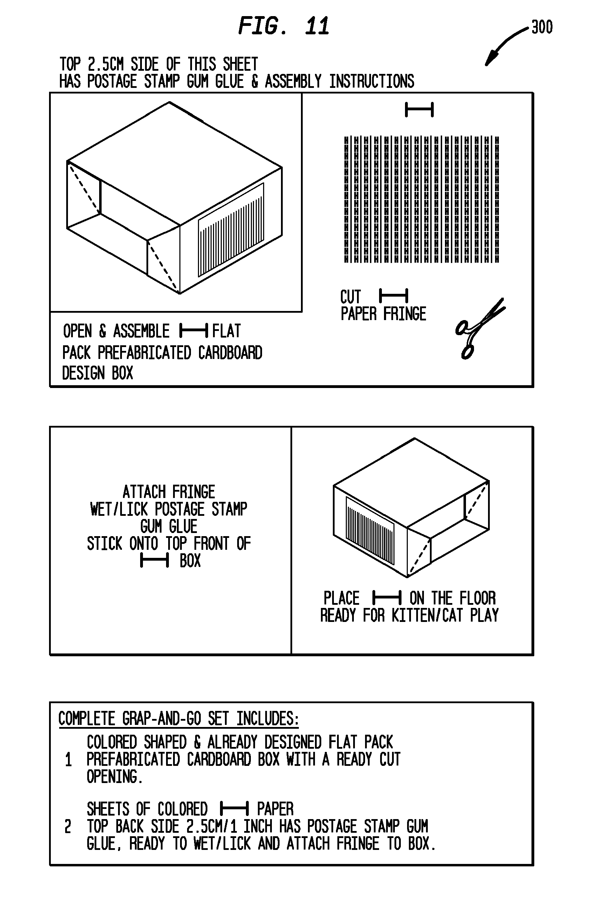

FIG. **11** illustrates example assembly instructions 300 for the pet toy and shelter kit 1. Instructions 300 may describe actions to be taken for opening a package containing the kit 1, assembling the collapsible housing 100, preparing the fringe 200 and coupling the fringe 200 to the collapsible housing 100. It should be noted that instructions 300 are shown only for purposes of illustration, and the instructions are not limited to these example actions.

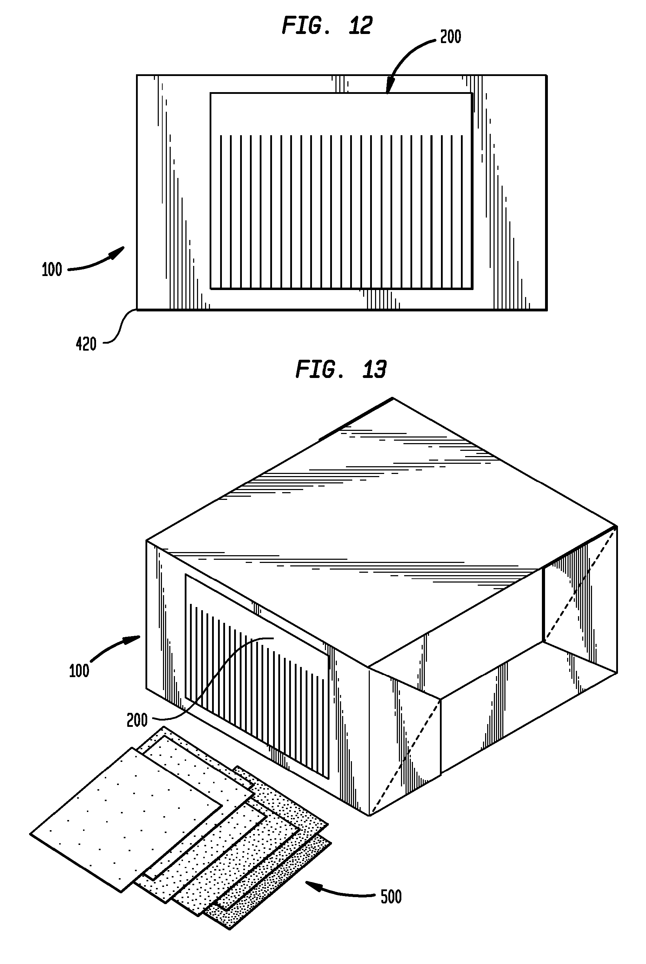

FIG. 12 illustrates an example pet toy and shelter with a decorative frame 420 surrounding passageway 170 and a coupled fringe 200. A variety of different color frames 420 or frame materials may be provided as part of kit 1.

FIG. 13 illustrates an example pet toy and shelter with a fringe and a variety of additional coloring sheets 500 which may be selected and applied by an end user to provide additional beauty to toy and shelter 10 as part of kit 1. In an example, the motif may be readily changed at the user's desire (e.g., for time of year, seasons, or area of use).

Although described herein as the example pet toy and shelter 10 may be constructed cardboard, the example pet toy and shelter 10 is not limited to manufacture of any particular type, color, or shape of material. In addition, the example pet toy and shelter 10 may come unassembled in any of a variety of different configurations, and in another example, may come pre-assembled upon purchase. Example pet toy and shelter 10 may be manufactured from plastic or coated with a plastic or similar material so as to be hygienic and may additionally or alternatively be formed of a material or otherwise constructed to be easily disposed of or recycled if soiled, contaminated, worn or otherwise damaged.

Manufacturers may appreciate that the pet toy and shelter 10 may be easily manufactured and efficiently transported for sale locally or globally. In an example, the pet toy and shelter 10 does not even need extra packaging, and so it can be produced at a low cost and on demand as a complete, all-in-one, grab-and-go package or kit.

Before continuing, it should be noted that the examples described above are provided for purposes of illustration, and are not intended to be limiting. Other devices and/or device configurations may be utilized to carry out the operations described herein. Further examples include but are not limited to the pet toy and shelter 10 being incorporated with pet furniture, pet toys, pet accessories, and/or the fringe 200 being used in front of entry ways or entrances to other devices (e.g., litter boxes).

According to an example method of providing a pet toy and shelter 10, a sheet or other portion of material is configured with a plurality of relatively pivotable facets 120, 140, 160 and 180 to provide an expandable housing 100. A passage 170 is formed or designated in the housing 100. A fringe 200 is provided for attachment to housing 100 adjacent to and at least partially covering passage 170. The fringe may be produced with a plurality of individual strips, or with designations for individual strips to be separated by the end-user.

In an example pet toy and shelter kit, instructions 300 are supplied to describe actions to be taken for expanding or otherwise erecting housing 100, preparing the fringe 200, and coupling the fringe 200 with housing 100. A variety of fringes 200 may be supplied for at least partially covering the passage 170, and a variety of coverings may also be supplied for at least partially wrapping the outside of housing 100 and/or covering the inside of the house. In an example, one or more closed loops of perforations are formed in one of the plurality of facets 120, 140, 160 and 180 to enable an end user to form passage 170 or cut lines are designated on housing 100.

Adjacent facets 120, 140, 160 and 180 are configured with angles there between to expand or erect housing 100. Front facet 160 is folded or otherwise configured into an orientation approximately perpendicular to bottom facet 180; top facet 140 is folded into an orientation approximately perpendicular to front facet 160 and approximately parallel with the bottom facet 180; and back facet 120 is folded into an orientation approximately perpendicular to the top facet 140 and approximately parallel with the front facet 160.

With housing 100 expanded, flaps of the front 160, bottom 180, top 140 and back 120 facets may be overlapped to facilitate selectively maintaining housing 100 in the erected state. First top facet flap 143 and second top facet flap 145 are folded or otherwise configured into orientations approximately perpendicular to top facet 140 in a direction generally towards bottom facet 180 and first front facet flap 165 and second front facet flap 167 are folded into an orientation approximately perpendicular to the front facet 160 in a direction generally towards the back facet 120. With the flaps so configured, sub-flaps may be overlapped therewith to reinforce erected housing 100. A first front facet sub-flap 163 is folded or otherwise configured into an orientation approximately perpendicular to the first front facet flap 165 and a second front facet sub-flap 169 is configured into an orientation approximately perpendicular to the second front facet flap 167. With the sub-flaps folded, sub flap 163 may be glued or interlocked with first bottom facet flap 183 and sub flap 169 may be glued or interlocked with first bottom facet flap 185. Next, first back facet flap 125 and second back facet flap 127 are configured into an orientation approximately perpendicular to the back facet 120 in a direction generally towards the front facet 160. First 183 and second 185 bottom facet flaps are configured into an orientation approximately perpendicular to bottom facet 180 in a direction generally towards top facet 140 where they may be selectively secured to first 125 and second 127 back flaps.

With housing 100 erected and cooperating flaps and sub-flaps permanently or temporarily secured to one another, if a passage has not been formed by a manufacturer or supplier, passage 170 may be formed. In some examples, passage 170 may be formed in housing 100 prior to assembly. Then with the housing 100 erected and passage 170 formed therein, fringe 200 is coupled with front facet 160 adjacent to the passage 170 such that part of the fringe 200 covers passage 170.

As indicated above, coupling fringe 200 may include providing an adhesive such as glue to fringe base 220 and/or the front facet 160 and adhering the fringe 200 to the front facet 160 or removing a protective strip from adhesive provided to the fringe 200 and adhering the fringe 200 to the front facet 160. In other examples, fringe 200 may be pinned to front facet 160.

Prior to coupling fringe 200 to housing 100, adjacent strips/fibers 240 may be separated. Separation of adjacent strips or fibers 240 may include cutting along a plurality of demarcations provided between adjacent strips/fibers 240 or may include tearing along a plurality of perforations provided between adjacent strips/fibers 240.

Operations to assemble and use the pet toy and shelter 10 shown and described herein are provided to illustrate example implementations. It is noted that the operations are not limited to the ordering shown. Still other operations may also be implemented. For example, front facet 160 may be configured into a perpendicular orientation relative to top facet 140 prior to configuring front facet 160 into a perpendicular orientation relative to bottom facet 180.

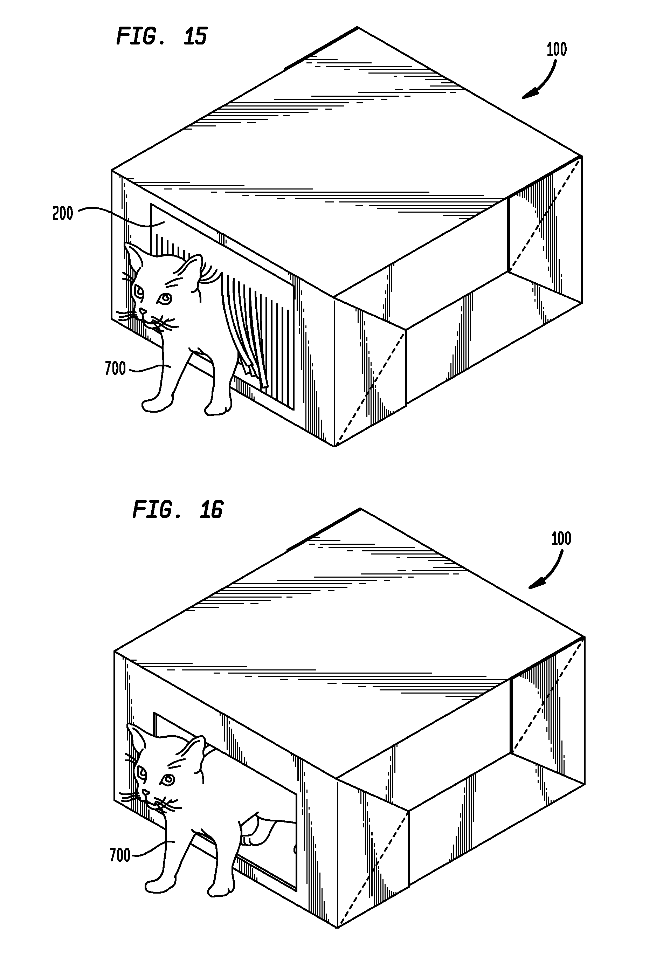

The pet toy and shelter 10 may be utilized as a toy, a play and exercise apparatus, and a personal territory and secure shelter, e.g., for pets to sleep or rest in, or it may be used as an entryway or entrance way to a housed or hooded litter box and/or as an enclosed litter box housing. Pets that use the pet toy and shelter 10 may live longer, healthier active lives. For example, the pet toy and shelter 10 may help keep pets mentally and physically sharp and may compliment other pet toys or products. FIGS. 15-18 illustrate a pet 700 engaging with the example pet toy and shelter 10. Of course, use of the example pet toy and shelter 10 is not limited to these illustrations.

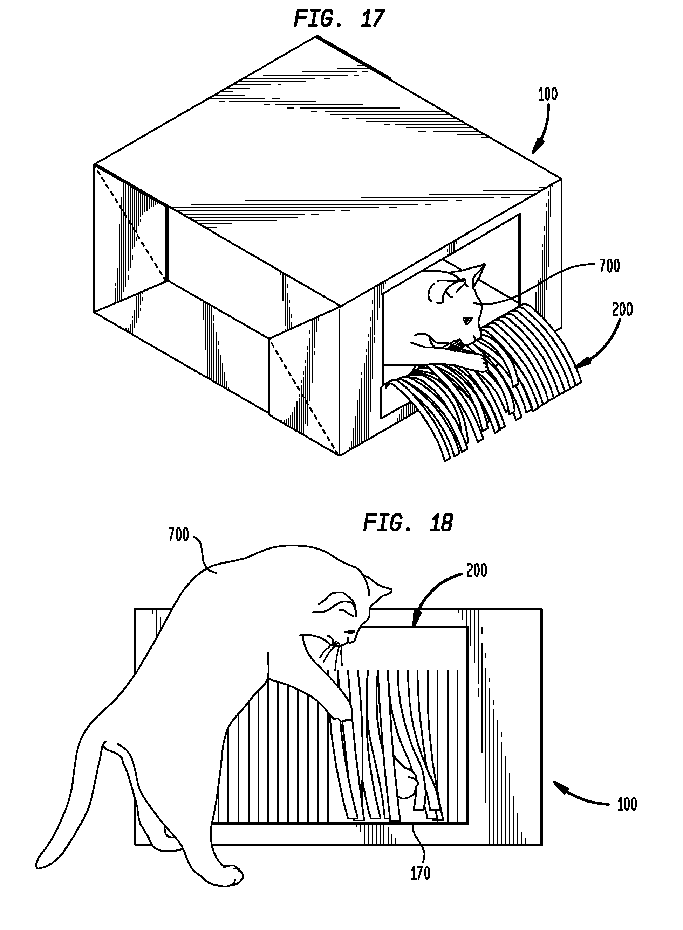

It is noted that the base 220 of fringe 200 is shown above strips 240. However, other orientations may also be enjoyed by pets. For example, a pet 700 may be stimulated by the arrangement of base 220 below strips 240 (FIG. 18). This may be accomplished either by resting toy and shelter 10 on top facet 140 rather than bottom facet 120 or by coupling fringe 200 to front facet 160 in an inverted orientation at a location adjacent to bottom surface 180.

While housing 100 has generally been referred to as collapsible, it should be noted that housing 100 is collapsible from an expanded state but expandable from a collapsed state. As such, housing 100 may be described either as collapsible or expandable depending on the reference state. In other examples, the housing 100 may be provided in a non-collapsible state (e.g., as a hard shell).

It is noted that the examples shown and described are provided for purposes of illustration and are not intended to be limiting. Still other examples are also contemplated.

## Claims

1. A pet toy and shelter, comprising:
(i) a collapsible housing having a passage formed therein for entry and exit of a pet;
(ii) a fringe at least partially covering the passage.

2. The pet toy and shelter of claim 1, wherein the fringe includes a plurality of strips to enable entry and exit of the pet through the passage while covering the passage.

3. The pet toy and shelter of claim 1 or 2, wherein the passage is generally rectangular in shape.

4. The pet toy and shelter of any one of claims 1 to 3, wherein the housing is
(i) made of a recyclable, foldable material; and/or
(ii) has flexible fold-lines between adjacent facets to enable assembly from a flat configuration, preferably, wherein one or more of the facets include pivoting flaps and at least two of the flaps overlap in an assembled state.

5. The pet toy and shelter of any one of claims 1 to 4, further comprising a litter box within the housing and behind the fringe.

6. The pet toy and shelter of any one of claims 1 to 5, wherein the housing assumes a flat shape in an unassembled state and the housing assumes a rectangular in an assembled state.

7. The pet toy and shelter of any one of claims 1 to 6, further comprising a covering over the housing.

8. The pet toy and shelter of any one of claims 1 to 7, wherein the fringe is detachable from the housing.

9. A pet toy and shelter kit, comprising:
(i) a collapsible, portable housing; and
(i) a plurality of fringes, individually selectable by an end-user and attachable to the housing.

10. The pet toy and shelter kit of claim 9, further comprising
(i) a precut passage formed in the housing; and/or
(ii) perforations to form a passage in the housing for entry and exit of a pet, the perforations providing a variable size passage so that a smaller passage is provided by the user after assembly for smaller pets, and a larger passage is provided by the user after assembly for larger pets.

11. The pet toy and shelter kit of claim 10, further comprising a covering for the housing.

12. The pet toy and shelter kit of claim 10 or 11, further comprising instructions describing actions for assembling the housing, preparing the fringe, and coupling the fringe with the housing.

13. The pet toy and shelter kit of any one of claims 10 to 12, wherein the fringe includes a base portion and a plurality of strips extending from the base portion, preferably further comprising a coupling to join the fringe base portion to the housing.

14. A method of providing a pet toy and shelter, comprising:
(i) configuring a portion of material with a plurality of relatively pivotable facets to erect a housing;
(ii) designating a passage in the housing; and
(iii) providing at least one fringe for attachment to the housing adjacent to the passage to at least partially cover the passage.

15. The method as set forth in claim 14, further comprising supplying a variety
(i) of fringe configurations as part of a kit, and/or
(ii) of cover configurations as part of a kit to wrap the housing.
